# EUROPÄISCHE PATENTANMELDUNG

(11) **EP 4 516 439 A1**
(43) Veröffentlichungstag der Anmeldung: **05.03.2025**
(21) Anmeldenummer: 23194162.6
(22) Anmeldetag: 30.08.2023
(51) Int. Cl.: B23K 1/08, B23K 3/06, B23K 3/08

(54) **VERFAHREN ZUM BEWERTEN EINES LÖTPROZESSES IN EINER LÖTANLAGE FÜR FLÜSSIGLOT MITTELS EINER ÜBERWACHUNGSVORRICHTUNG, COMPUTERPROGRAMMPRODUKT, COMPUTERLESBARES SPEICHERMEDIUM SOWIE ÜBERWACHUNGSVORRICHTUNG**

(71) Anmelder: Siemens Aktiengesellschaft, 80333 München (DE)
(72) Erfinder: Hanisch, Michael, 16540 Hohen Neuendorf (DE); Jarchoff, Kay, 13347 Berlin (DE); Müller, Bernd, 16259 Falkenberg (DE); Paulick, Tim Carl, 15907 Lübben (Spreewald) (DE); Sommerfeld, Dennis, 12347 Berlin (DE); Wittreich, Ulrich, 16727 Velten (DE)
(74) Vertreter: Siemens Patent Attorneys

(57) **Zusammenfassung**

Die Erfindung betrifft ein Verfahren zum Bewerten eines Lötprozesses in einer Lötanlage (10) für flüssiges Lot (18) mittels einer Überwachungsvorrichtung (12), mit den Schritten: Bereitstellen eines Referenz-Lotmusters (24) für die Lötanlage (10) mittels einer elektronischen Recheneinrichtung (22) der Überwachungsvorrichtung (12); Erfassen eines aktuellen Lotmusters (26) der Lötanlage (10) mittels einer Wärmebildkamera (20) der Überwachungsvorrichtung (12); Vergleichen des aktuellen Lotmusters (26) mit dem Referenz-Lotmuster (24) mittels der elektronischen Recheneinrichtung (22); und Bewerten des Lötprozesses in Abhängigkeit von dem Vergleich mittels der elektronischen Recheneinrichtung (22). Ferner betrifft die Erfindung ein Computerprogrammprodukt, ein computerlesbares Speichermedium sowie eine Überwachungsvorrichtung (12) .

## Beschreibung

Die Erfindung betrifft ein Verfahren zum Bewerten eines Lötprozesses in einer Lötanlage für Flüssiglot mittels einer Überwachungsvorrichtung gemäß dem geltenden Patentanspruch 1. Ferner betrifft die Erfindung ein Computerprogrammprodukt, ein computerlesbares Speichermedium sowie eine Überwachungsvorrichtung.

Bei sogenannten Selektiv-Lötprozessen werden häufig benetzende Lötdüsen verwendet, welche einem hohen Verschleiß unterliegen. Hierbei wird die Benetzbarkeit der Lötdüsenoberfläche eingeschränkt, und es ergeben sich von dem die Lötdüse umlaufenden Lot nicht benetzte Bereiche. Dies führt zu einer ungleichmäßigen Lötwellengeometrie und somit beim Selektivlötvorgang zu instabilen Prozessen und verminderter Produktqualität. Aktuell gibt es keine automatisierte Auswertung zur Ermittlung nicht benetzter Lötdüsenoberflächenbereiche. Es findet nur eine sporadisch visuelle Beobachtung meist mittels einer Prozesskamera und Monitoranzeige mit subjektiver Bewertung statt, ob ein Reagieren auf Veränderungen notwendig ist oder nicht. Für einen qualitativ hochwertigen Lötprozess ist ein reproduzierbarer gleichmäßiger Lotabfluss über die benetzte Lötdüsenoberfläche zwingend notwendig. Eine automatisierte fertigungsbegleitende Überprüfung der Lötdüsenbenetzung ist aktuell nicht möglich, sodass Schwankungen der Benetzung der Lötdüsen zu Lötproblemen, beispielsweise Lotdurchstieg, Lotbrücken oder nicht gelötete Bereiche, führen.

Wellenlötanlagen mit breiter Lötwelle haben häufig aufgrund von Verschleiß und Verschmutzung Probleme, über die gesamte Wellenbreite eine gleichmäßige Ausbildung der Welle des flüssigen Lots, welche zur Herstellung der Lötverbindung zwischen den Bauelementanschlüssen und der Leiterplatte führt, sicherzustellen. Eine automatisierte fertigungsbegleitende Überprüfung der Lötwellenausprägung ist aktuell nur eingeschränkt für einzelne Kontakt- oder Temperaturmesspunkte möglich, sodass Schwankungen der Lötwellenausprägung zu Lötproblemen führen können.

Hubtauchlötanlagen mit mehreren Lötkaminen unterschiedlicher Geometrien haben häufig aufgrund von Verschleiß und Verschmutzung Probleme, über die gesamte zu lötende Produktfläche eine gleichmäßige Ausbildung der Lotfüllung in den Kaminen für alle einzelnen Lotkamine zu realisieren. Eine automatisierte fertigungsbegleitende Überprüfung der Lotfüllungsausprägung der einzelnen Kamine ist aktuell nur eingeschränkt mit Hilfe einzelner Kontakt- oder Temperaturmesspunkte möglich, sodass Schwankungen zu Lötproblemen führen können.

Nicht benetzende Lötdüsen können bei Verschleiß, Beschädigung oder Verschmutzung in der Lötwellenausprägung ebenfalls Schwankungen aufweisen. Diese sind schwer zu ermitteln und können somit auch zu Lötproblemen führen.

Aufgabe der vorliegenden Erfindung ist es, ein Verfahren, ein Computerprogrammprodukt, ein computerlesbares Speichermedium sowie eine Überwachungsvorrichtung zu schaffen, mittels welchen ein Lötprozess zuverlässig überwacht und bewertet werden kann.

Diese Aufgabe wird durch ein Verfahren, ein Computerprogrammprodukt, ein computerlesbares Speichermedium sowie eine Überwachungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bewerten eines Lötprozesses in einer Lötanlage für Flüssiglot mittels einer Überwachungsvorrichtung. Es erfolgt das Bereitstellen eines Referenz-Lotmusters für die Lötanlage mittels einer elektronischen Recheneinrichtung der Überwachungsvorrichtung. Es wird ein aktuelles Lotmuster der Lötanlage mittels einer Wärmebildkamera der Überwachungsvorrichtung erfasst. Es erfolgt das Vergleichen des aktuellen Lotmusters mit dem Referenz-Lotmuster mittels der elektronischen Recheneinrichtung und das Bewerten des Lötprozesses in Abhängigkeit von dem Vergleich mittels der elektronischen Recheneinrichtung.

Somit kann auf Basis eines Wärmebilds der Lötprozess zuverlässig überwacht und bewertet werden.

Insbesondere bedient sich dabei die Erfindung des zugrunde liegenden Prinzips, dass Unterschiede der Oberfläche durch Temperatur, ein Emissionskoeffizient bei der Wärmebildanalyse oder auch bei einer Grau- beziehungsweise Farbwertanalyse bei der visuellen Bildanalyse zwischen freiliegenden, insbesondere nicht benetzten, Lötdüsenbereichen und Bereichen, welche mit flüssigem Lot umspült (benetzt) werden, mittels einer Wärmebildkamera oder visuellen Kamera und entsprechenden Messwert- beziehungsweise Bildauswertungen ermittelt werden. Hierbei ist ein flexibel konfigurierbarer Auswertebereich einer düsengeometriespezifischen Auswertung realisierbar. Durch eine Einstellung von maximal zulässiger Temperatur- oder Farbton- beziehungsweise Graustufendifferenz für den festgelegten Auswertebereich, können bei Überschreitung dieser Werte entsprechend vorher festgelegte Aktionen auch als Close-Loop-Szenarien veranlasst werden.

Im Vergleich zu bisherigen Lösungen ist mit der Umsetzung des genannten Prinzips eine Qualitätskontrolle und -regelung für benetzende Lötdüsen als auch für die Form und Ausprägung von Lötwellen und mit flüssigem Lot gefüllten Bereichen möglich. Dieses kann sowohl unmittelbar vor dem Löten von Produkten als auch prozessbegleitend während des Selektiv-, Wellen- oder Hubtauchlötens von Baugruppen erfolgen. Dies ermöglicht die Reduzierung von Nacharbeit und Verwurfskosten und auch die Nutzung kurzer Regelschleifen, um die gegebenenfalls entsprechende Aktionen wie automatische Düsenreinigung, die Aufforderung zu einem Düsenwechsel oder Ähnliches nach objektiven Kriterien automatisiert einzuleiten. Dies stellt im Vergleich zu bisherigen sporadischen subjektiven Bewertungen einen erheblichen Vorteil dar.

Insbesondere durch eine kontinuierliche Erfassung der Lötdüsenbenetzung werden auch Veränderungen, wie zum Beispiel durch Chargenschwankungen, unterschiedliche Nutzungen der Lötdüsen und Ähnliches erfasst. Damit kann zum einen ein Qualitätsfilter für nachfolgende Produkte gesetzt werden und gegebenenfalls auch auf andere Lötdüsen flexibel umgesteuert werden oder bei entsprechenden Anlagenfähigkeiten auch ein automatischer Lötdüsenwechsel initiiert werden.

Gemäß einer vorteilhaften Ausgestaltungsform wird eine Lötdüse der Lötanlage überwacht. Insbesondere kann somit bei einer Lötanlage mit einer Lötdüse die Lötdüse entsprechend überwacht werden und eine Funktionalität der Lötdüse bewertet werden.

Weiterhin vorteilhaft ist, wenn die Lötdüse als benetzende Lötdüse bereitgestellt wird. Dabei kann somit die benetzende Lötdüse entsprechend überwacht werden, wodurch die Lötanlage mit benetzenden Lötdüsen zuverlässiger betrieben werden kann.

Eine weitere vorteilhafte Ausgestaltungsform sieht vor, dass die Lötanlage als Wellenlötanlage bereitgestellt wird. Mit der Wärmebildkamera beziehungsweise visuellen Bildaufnahme ist somit eine spezifische örtliche Detektion bezogen auf den auszuwertenden Bereich möglich. Somit kann eine zielgerichtet spezifische Qualitätskontrolle prozessbegleitend erfolgen, und Abweichungen können sowohl produktspezifisch zugeordnet werden als auch Aktionen initiiert werden, zum Beispiel automatische Düsenreinigung oder eine Aufforderung zum Düsenwechsel. Dieses Verfahren ist ergänzend zur regelmäßigen Überprüfung der Anlage als auch der Düsen-Standzeit und für Predictive Maintainance geeignet.

Es hat sich weiterhin als vorteilhaft erwiesen, wenn als Referenz-Lotmuster ein Referenz-Wärmebild vorgegeben wird und das Referenz-Wärmebild mit einem aktuellen Wärmebild verglichen wird. Beispielsweise können hierzu entsprechende Temperaturen beziehungsweise auch Farbcodes genutzt werden, um einen Vergleich durchzuführen. Somit ist es auf einfache Art und Weise ermöglicht, einen entsprechenden Vergleich durchzuführen.

Weiterhin vorteilhaft ist, wenn bei einer Abweichung des aktuellen Lotmusters von dem Referenz-Lotmuster eine Warnmeldung ausgegeben wird. Beispielsweise kann somit ein Bediener der Lötanlage entsprechend gewarnt werden, sollte es zu entsprechenden Abweichungen kommen.

Weiterhin vorteilhaft ist, wenn die Überwachung und Bewertung kontinuierlich während eines Betriebs der Lötanlage durchgeführt wird. Somit kann beispielsweise sowohl bei einer Initiierung der Lötanlage eine entsprechende Überwachung durchgeführt werden als auch beim Betrieb und somit kontinuierlich während des Betriebs. Somit kann eine Überwachung auch während des Betriebs durchgeführt werden, wodurch dauerhaft die Lötanlage entsprechend überwacht und bewertet werden kann.

Ebenfalls vorteilhaft ist, wenn in Abhängigkeit von der Bewertung eine automatisierte Reinigung der Lötanlage initiiert wird. Beispielsweise können hierzu entsprechend Reinigungseinrichtungen der Lötanlage bedient werden, um eine entsprechende Reinigung der Lötanlage zu initiieren. So kann ein zuverlässiger Lötprozess bereitgestellt werden.

Weiterhin vorteilhaft ist, wenn in Abhängigkeit von der Bewertung eine automatisierter Wechsel einer Lötdüse initiiert wird. Sollte beispielsweise eine Lötdüse defekt sein und entsprechend nicht mehr den Lötprozess geeignet unterstützen, so können ein automatischer Wechsel der Lötdüse initiiert werden. Alternativ kann auch einem Bediener der Lötanlage ein Wechsel einer Lötdüse vorgeschlagen werden.

Es hat sich weiterhin als vorteilhaft erwiesen, wenn in Abhängigkeit von der Bewertung ein Stopp eines Betriebs der Lötanlage initiiert wird. Sollte beispielsweise eine entsprechende Lötdüse defekt sein, so kann der Betrieb der Lötanlage gestoppt werden, sodass keine fehlerhaften Produkte produziert werden.

Es hat sich weiterhin als vorteilhaft erwiesen, wenn in Abhängigkeit von einem zu erwartenden Bereich für flüssiges Lot an der Lötanlage und einem tatsächlichen Bereich mit flüssigem Lot die Bewertung durchgeführt wird. Beispielsweise können entsprechende Bereiche, an welchen Lot für ein korrektes Produkt bereitgestellt werden muss, entsprechend überwacht werden. Sollte nun in diesem Bereich kein Lot detektiert werden, so kann ein fehlerhafter Prozess bestimmt werden. Ferner kann auch in Bereichen, in denen kein Lot erwartet wird, aber Lot erfasst wird, eine entsprechende Bewertung durchgeführt werden, dass ein fehlerhafter Lötprozess durchgeführt wird.

Eine weitere vorteilhafte Ausgestaltungsform sieht vor, dass eine horizontale Aufnahme und/oder eine vertikale Aufnahme der Lötanlage durchgeführt wird. Beispielsweise kann die Lötanlage hierzu zwei unterschiedlich angeordnete Wärmebildkameras aufweisen, einmal für eine horizontale Überwachung sowohl für eine vertikale Überwachung. Somit kann der Lötprozess aus unterschiedlichen Richtungen entsprechend überwacht werden, wodurch eine verbesserte Überwachung des Lötprozesses realisiert werden kann.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein weiterer Aspekt der Erfindung betrifft daher auch ein computerlesbares Speichermedium mit zumindest dem Computerprogrammprodukt.

Ferner betrifft die Erfindung auch eine Überwachungsvorrichtung zum Bewerten eines Lötprozesses in einer Lötanlage für Flüssiglot, mit zumindest einer elektronischen Recheneinrichtung und einer Wärmebildkamera, wobei die Überwachungsvorrichtung zum Durchführen eines Verfahrens nach dem vorhergehenden Aspekt ausgebildet ist. Insbesondere wird das Verfahren mittels der Überwachungsvorrichtung durchgeführt.

Des Weiteren betrifft die Erfindung auch eine Lötanlage mit einer Überwachungsvorrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der Überwachungsvorrichtung sowie der Lötanlage anzusehen. Die Überwachungsvorrichtung sowie die Lötanlage weisen hierzu gegenständliche Merkmale auf, um entsprechende Verfahrensschritte durchführen zu können.

Im Rahmen der vorliegenden Offenbarung kann ein Objekterkennungsalgorithmus, insbesondere zum Erfassen/Erkennen des flüssigen Lots, als ein Computeralgorithmus verstanden werden, der in der Lage ist, eines oder mehrere Objekte innerhalb eines bereitgestellten Eingangsdatensatzes, beispielsweise Eingangsbildes, zu identifizieren und zu lokalisieren, beispielsweise indem er entsprechende Begrenzungsboxen oder Bereiche von Interesse, ROI (englisch: "region of interest"), festlegt und insbesondere jeder der Begrenzungsboxen eine entsprechende Objektklasse zuordnet, wobei die Objektklassen aus einem vordefinierten Satz von Objektklassen ausgewählt werden können. Dabei kann die Zuweisung einer Objektklasse zu einer Begrenzungsbox derart verstanden werden, dass ein entsprechender Konfidenzwert oder eine Wahrscheinlichkeit dafür, dass das innerhalb der Begrenzungsbox identifizierte Objekt zu der entsprechenden Objektklasse gehört, bereitgestellt wird. Zum Beispiel kann der Algorithmus für eine gegebene Begrenzungsbox für jede der Objektklassen einen solchen Konfidenzwert oder eine Wahrscheinlichkeit bereitstellen. Die Zuweisung der Objektklasse kann zum Beispiel die Auswahl oder Bereitstellung der Objektklasse mit dem größten Konfidenzwert oder der größten Wahrscheinlichkeit beinhalten. Alternativ kann der Algorithmus auch lediglich die Begrenzungsboxen festlegen, ohne eine entsprechende Objektklasse zuzuordnen.

Algorithmen zur automatischen visuellen Wahrnehmung, die auch als Computer-Vision-Algorithmen, Algorithmen zum maschinellen Sehen oder Machine-Vision-Algorithmen bezeichnet werden können, können als Computeralgorithmen zur automatischen Durchführung einer visuellen Wahrnehmungsaufgabe betrachtet werden. Eine visuelle Wahrnehmungsaufgabe, die auch als Computer-Vision-Aufgabe bezeichnet wird, kann beispielsweise als eine Aufgabe zur Extraktion von visuellen Informationen aus Bilddaten verstanden werden. Insbesondere kann die visuelle Wahrnehmungsaufgabe in einigen Fällen prinzipiell von einem Menschen ausgeführt werden, der in der Lage ist, ein den Bilddaten entsprechendes Bild visuell wahrzunehmen. Im vorliegenden Zusammenhang werden visuelle Wahrnehmungsaufgaben jedoch auch automatisch durchgeführt, ohne dass die Unterstützung eines Menschen erforderlich ist.

Ein Computer-Vision-Algorithmus kann beispielsweise einen Bildverarbeitungsalgorithmus oder einen Algorithmus zur Bildanalyse enthalten, der durch maschinelles Lernen trainiert wird oder wurde und beispielsweise auf einem künstlichen neuronalen Netzwerk, insbesondere einem faltenden neuronalen Netz, basieren kann. Der Computer-Vision-Algorithmus kann beispielsweise einen Objekterkennungsalgorithmus, einen Hinderniserkennungsalgorithmus, einen Objektverfolgungsalgorithmus, einen Klassifikationsalgorithmus einen semantischen Segmentierungsalgorithmus, und/oder einen Tiefenschätzalgorithmus umfassen.

Entsprechende Algorithmen können analog auch basierend auf anderen Eingabedaten als von einem Menschen visuell wahrnehmbaren Bildern durchgeführt werden. Beispielsweise können auch Punktwolken oder Bilder von Infrarotkameras, Lidarsystemen et cetera mittels entsprechend angepasster Computeralgorithmen ausgewertet werden. Streng genommen handelt es sich bei den entsprechenden Algorithmen nicht um Algorithmen zur visuellen Wahrnehmung, da die entsprechenden Sensoren in Bereichen arbeiten können, die visuell, also für das menschliche Auge, nicht wahrnehmbar sind, zum Beispiel im Infrarotbereich. Deshalb werden solche Algorithmen im Rahmen der vorliegenden Erfindung Algorithmen zur automatischen Wahrnehmung bezeichnet. Algorithmen zur automatischen Wahrnehmung schließen also Algorithmen zur automatischen visuellen Wahrnehmung ein, sind aber im Hinblick auf eine menschliche Wahrnehmung nicht auf diese beschränkt. Folglich kann ein Algorithmus zur automatischen Wahrnehmung nach diesem Verständnis einen Computeralgorithmus zur automatischen Durchführung einer Wahrnehmungsaufgabe enthalten, der beispielsweise durch maschinelles Lernen trainiert wird oder wurde und insbesondere auf einem künstlichen neuronalen Netzwerk basieren kann. Zu solchen verallgemeinerten Algorithmen zur automatischen Wahrnehmung können auch Objektdetektionsalgorithmen, Objektverfolgungsalgorithmen, Klassifizierungsalgorithmen und/oder Segmentierungsalgorithmen, zum Beispiel semantische Segmentierungsalgorithmen, gehören.

Falls ein künstliches neuronales Netzwerk zur Implementierung eines Algorithmus zur automatischen visuellen Wahrnehmung verwendet wird, ist eine häufig eingesetzte Architektur die eines faltenden neuronales Netzwerks, CNN. Insbesondere kann ein 2D-CNN auf entsprechende 2D-Kamerabilder angewendet werden. Auch für andere Algorithmen zur automatischen Wahrnehmung können CNNs verwendet werden. Beispielsweise können 3D-CNNs, 2D-CNNs oder 1D-CNNs auf Punktwolken angewendet werden, abhängig von den räumlichen Dimensionen der Punktwolke und den Details der Verarbeitung.

Das Ergebnis oder die Ausgabe eines Algorithmus zur automatischen Wahrnehmung ist abhängig von der spezifischen zugrundeliegenden Wahrnehmungsaufgabe. Beispielsweise kann die Ausgabe eines Objekterkennungsalgorithmus eine oder mehrere Begrenzungsboxen enthalten, die eine räumliche Position und optional eine Orientierung eines oder mehrerer entsprechender Objekte in der Umgebung und/oder entsprechende Objektklassen für das eine oder die mehreren Objekte definieren. Eine Ausgabe eines semantischen Segmentierungsalgorithmus, der auf ein Kamerabild angewendet wird, kann eine Klasse auf Pixelebene für jedes Pixel des Kamerabildes enthalten. Analog dazu kann eine Ausgabe eines semantischen Segmentierungsalgorithmus, der auf eine Punktwolke angewendet wird, eine entsprechende Punktebenen-Klasse für jeden der Punkte enthalten. Die Klassen auf Pixelebene beziehungsweise auf Punktebene können beispielsweise einen Objekttyp definieren, zu dem der jeweilige Pixel oder Punkt gehört.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigen:
- FIG 1: ein schematisches Blockschaltbild gemäß einer Ausführungsform einer Lötanlage mit einer Ausführungsform einer Überwachungsvorrichtung;
- FIG 2: eine schematische Seitenansicht einer Ausführungsform einer Lötdüse;
- FIG 3: eine weitere schematische Seitenansicht einer Ausführungsform einer Lötdüse;
- FIG 4: eine schematische Seitenansicht einer weiteren Ausführungsform einer Lötdüse;
- FIG 5: eine schematische Seitenansicht einer Wellenlötanlage; und
- FIG 6: ein schematisches Ablaufdiagramm gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

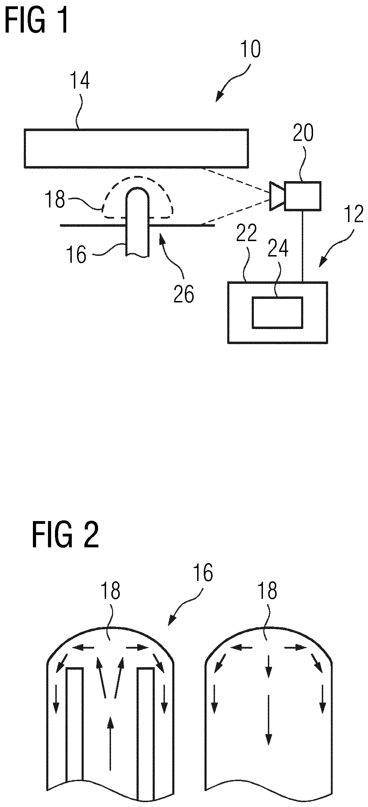

In FIG 1 zeigt in einer schematischen Seitenansicht eine Ausführungsform einer Lötanlage 10 mit einer Überwachungsvorrichtung 12. In der Lötanlage 10 wird ein Produkt 14 in den vorigen Ausführungsformen mittels einer Lötdüse 16 gelötet. Aus der Lötdüse 16 strömt flüssiges Lot 18, um das Bauteil 14 entsprechend zu löten.

Die Überwachungsvorrichtung 12 weist im vorliegenden Ausführungsbeispiel insbesondere zumindest eine Wärmebildkamera 20 sowie eine elektronische Recheneinrichtung 22 auf. Die elektronische Recheneinrichtung 22 stellt insbesondere ein Referenz-Lotmuster 24 bereit.

Insbesondere zeigt die FIG 1, dass mittels der Überwachungsvorrichtung 12 ein Lötprozess der Lötanlage 10 entsprechend überwacht und bewertet werden kann. Es wird das Referenz-Lotmuster 24 für die Lötanlage 10 mittels der elektronischen Recheneinrichtung 22 bereitgestellt. Es wird ein aktuelles Lotmuster 26 der Lötanlage 10 mittels der Wärmebildkamera 20 erfasst. Es erfolgt ein Vergleichen des aktuellen Lotmusters 26 der Lötanlage 10 mit dem Referenz-Lotmuster 24 mittels der elektronischen Recheneinrichtung 22, und in Abhängigkeit von dem Vergleich findet eine Bewertung des Lötprozesses mittels der elektronischen Recheneinrichtung 22 statt.

FIG 2 zeigt eine schematische Schnittansicht auf der linken Seite und auf der rechten Seite eine schematische Seitenansicht einer Lötdüse 16. Insbesondere ist gezeigt, wie aus der Lötdüse 16 das flüssige Lot 18 herausgepumpt wird. Eine entsprechende Aufnahme mittels der Wärmebildkamera 20 bei einem korrekten Lötprozess ist wiederum auf der rechten Seite der FIG 2 gezeigt.

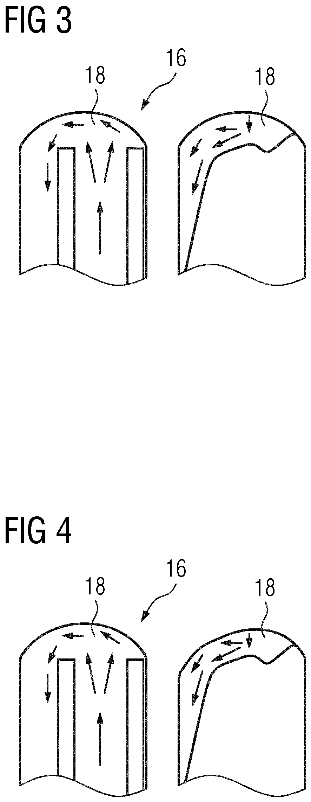

FIG 3 zeigt eine weitere Ausführungsform einer Lötdüse 16. Hierbei ist links wiederum eine Schnittdarstellung der Lötdüse 16 gezeigt und auf der rechten Seite ein entsprechendes tatsächlich aufgenommenes Bild, wie dies bei einem korrekten Lötprozess zu verzeichnen wäre.

FIG 4 zeigt wiederum die Lötdüse 16 aus FIG 3. Links ist wiederum eine Schnittdarstellung gezeigt wie ein korrekter Lötprozess stattfinden würde. Auf der rechten Seite ist ein nicht korrekter Lötfluss gezeigt, weil beispielsweise die Lötdüse 16 entsprechend verstopft ist.

Insbesondere zeigen somit die FIG 2 bis FIG 4, dass eine Lötdüse 16 der Lötanlage 10 überwacht wird. Dabei ist die Lötdüse 16 insbesondere als benetzende Lötdüse 16 bereitgestellt.

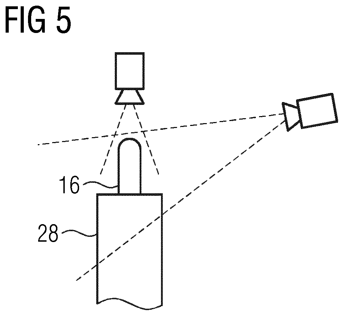

FIG 5 zeigt eine schematische Seitenansicht einer als Wellenlötanlage 28 ausgebildeten Lötanlage 10. Hierbei wird eine Lötwelle 16 mit flüssigem Lot 18 erzeugt, wobei das Bauteil 14 beispielsweise dann über diese Lötwelle 16 geführt wird.

Insbesondere zeigen somit die FIG 1 bis FIG 5, dass als Referenz-Lotmuster 24 beispielsweise ein Referenz-Wärmebild vorgegeben wird und das Referenz-Wärmebild mit dem aktuellen Wärmebild verglichen wird. Bei einer Abweichung des aktuellen Lotmusters 26 von dem Referenz-Lotmuster 24 kann insbesondere eine Warnmeldung ausgegeben werden. Ferner kann vorgesehen sein, dass die Überwachung und Bewertung kontinuierlich während eines Betriebs der Lötanlage 10 durchgeführt wird. Des Weiteren kann vorgesehen sei, dass in Abhängigkeit von der Bewertung eine automatisierte Reinigung der Lötanlage 10 initiiert wird. Ferner kann in Abhängigkeit von der Bewertung ein automatisierter Wechsel einer Lötdüse 16 initiiert werden. Weiterhin kann vorgesehen sein, dass in Abhängigkeit von der Bewertung ein Stopp eines Betriebs der Lötanlage 10 initiiert wird.

Ebenfalls kann vorgesehen sein, dass in Abhängigkeit von einem zu erwartenden Bereich für flüssiges Lot 18 an der Lötanlage 10 und einem tatsächlichen Bereich mit flüssigem Lot 18 die Bewertung durchgeführt wird.

Die FIG 5 zeigt dabei insbesondere, dass sowohl eine horizontale Aufnahme und/oder eine vertikale Aufnahme der Lötanlage 10 durchgeführt wird.

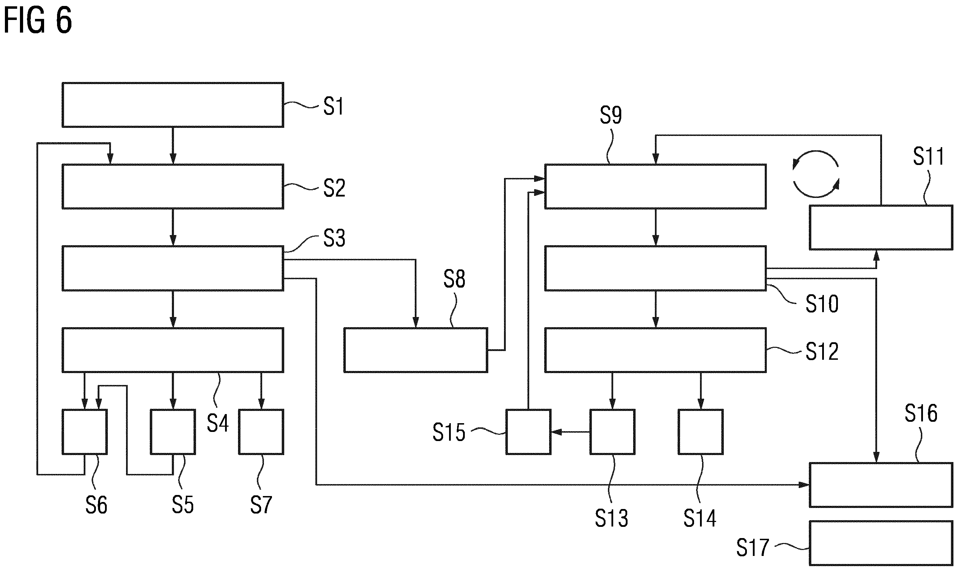

FIG 6 zeigt ein schematisches Ablaufdiagramm gemäß einer Ausführungsform des Verfahrens. In einem ersten Schritt S1 beginnt das Verfahren. In einem zweiten Schritt S2 erfolgt eine Wärmebildaufnahme vor der Produktion. In einem dritten Schritt S3 wird diese Wärmebildaufnahme entsprechend ausgewertet. In einem vierten Schritt S4 wird überprüft, ob das Ergebnis der Auswertung in Ordnung ist. Sollte das Ergebnis beispielsweise nicht in Ordnung sein, so kann ein automatischer Düsenwechsel in einem fünften Schritt S5 vorgeschlagen werden. Ferner kann in einem sechsten Schritt S6 auch eine Düsenreinigung vorgeschlagen werden. Ferner kann auch in einem siebten Schritt S7 eine Fehlermeldung und ein Stopp initiiert werden.

Sollte die Auswertung in einem achten Schritt S8 als in Ordnung bewertet werden, so kann in einem neunten Schritt S9 eine kontinuierliche Wärmebildaufnahme bei der Produktlötung durchgeführt werden. Es kann dann in einem zehnten Schritt S10 auch eine kontinuierliche Auswertung entsprechend durchgeführt werden. Sollte das Ergebnis in Ordnung sein, so wird in einem elften Schritt S11 der Lötvorgang weiter durchgeführt. Sollte während des Betriebs jedoch das Ergebnis als nicht in Ordnung bezeichnet werden, was vorliegend im zwölften Schritt S12 dargestellt wird, so kann eine automatische Düsenreinigung in einem dreizehnten Schritt S13 und/oder in einem vierzehnten Schritt S14 eine Fehlermeldung und ein Stopp erzeugt werden. Ferner kann eine sogenannte Close-Loop-Aktion in einem fünfzehnten Schritt S15 durchgeführt werden, sollte beispielsweise eine automatische Düsenreinigung erfolgen.

Ausgehend vom zehnten Schritt S10 und vom dritten Schritt S3 kann eine Datenanalyse in einem sechzehnten Schritt S16 durchgeführt werden. Hierbei kann beispielsweise eine Qualitätserfassung der Lötdüse 16 für jede Produkt ermöglicht werden. Des Weiteren kann auch eine Qualität- und Lebensdauerinformation zu den Lötdüsen 16 in einem siebzehnten Schritt S17 durchgeführt werden.

### Bezugszeichenliste

- 10: Lötanlage
- 12: Überwachungsvorrichtung
- 14: Bauteil
- 16: Lötdüse
- 18: flüssiges Lot
- 20: Wärmebildkamera
- 22: elektronische Recheneinrichtung
- 24: Referenz-Lotmuster
- 26: aktuelles Lotmuster
- 28: Wellenlötanlage
- S1 bis S17: Schritte des Verfahrens

## Patentansprüche

1. Verfahren zum Bewerten eines Lötprozesses in einer Lötanlage (10) für flüssiges Lot (18) mittels einer Überwachungsvorrichtung (12), mit den Schritten:
- Bereitstellen eines Referenz-Lotmusters (24) für die Lötanlage (10) mittels einer elektronischen Recheneinrichtung (22) der Überwachungsvorrichtung (12);
- Erfassen eines aktuellen Lotmusters (26) der Lötanlage (10) mittels einer Wärmebildkamera (20) der Überwachungsvorrichtung (12);
- Vergleichen des aktuellen Lotmusters (26) mit dem Referenz-Lotmuster (24) mittels der elektronischen Recheneinrichtung (22); und
- Bewerten des Lötprozesses in Abhängigkeit von dem Vergleich mittels der elektronischen Recheneinrichtung (22).

2. Verfahren nach Anspruch 1, **dadurch gekennzeichnet, dass** eine Lötdüse (16) der Lötanlage (10) überwacht wird.

3. Verfahren nach Anspruch 2, **dadurch gekennzeichnet, dass** die Lötdüse (16) als benetzende Lötdüse (16) bereitgestellt wird.

4. Verfahren nach Anspruch 1, **dadurch gekennzeichnet, dass** die Lötanlage (10) als Wellenlötanlage (28) bereitgestellt wird.

5. Verfahren nach einem der vorhergehenden Ansprüche, **dadurch gekennzeichnet, dass** als Referenz-Lotmuster (26) ein Referenz-Wärmebild vorgegeben wird und das Referenz-Wärmebild mit einem aktuellen Wärmebild verglichen wird.

6. Verfahren nach einem der vorhergehenden Ansprüche, **dadurch gekennzeichnet, dass** bei einer Abweichung des aktuellen Lotmusters (26) von dem Referenz-Lotmuster (24) eine Warnmeldung ausgegeben wird.

7. Verfahren nach einem der vorhergehenden Ansprüche, **dadurch gekennzeichnet, dass** die Überwachung und Bewertung kontinuierlich während eines Betriebs der Lötanlage (10) durchgeführt wird.

8. Verfahren nach einem der vorhergehenden Ansprüche, **dadurch gekennzeichnet, dass** in Abhängigkeit von der Bewertung eine automatisierte Reinigung der Lötanlage (10) initiiert wird.

9. Verfahren nach einem der vorhergehenden Ansprüche, **dadurch gekennzeichnet, dass** in Abhängigkeit von der Bewertung eine automatisierter Wechsel einer Lötdüse (16) initiiert wird.

10. Verfahren nach einem der vorhergehenden Ansprüche, **dadurch gekennzeichnet, dass** in Abhängigkeit von der Bewertung ein Stopp eines Betriebs der Lötanlage (10) initiiert wird.

11. Verfahren nach einem der vorhergehenden Ansprüche, **dadurch gekennzeichnet, dass** in Abhängigkeit von einem zu erwartenden Bereich für flüssiges Lot (18) an der Lötanlage (10) und einem tatsächlichen Bereich mit flüssigem Lot (18) die Bewertung durchgeführt wird.

12. Verfahren nach einem der vorhergehenden Ansprüche, **dadurch gekennzeichnet, dass** eine horizontale Aufnahme und/oder eine vertikale Aufnahme der Lötanlage (10) durchgeführt wird.

13. Computerprogrammprodukt mit Programmcodemitteln, welche eine elektronische Recheneinrichtung (22) dazu veranlassen, wenn die Programmcodemittel von der elektronischen Recheneinrichtung (22) abgearbeitet werden, ein Verfahren nach einem der Ansprüche 1 bis 12 durchzuführen.

14. Computerlesbares Speichermedium mit zumindest einem Computerprogrammproduckt nach Anspruch 13.

15. Überwachungsvorrichtung (12) zum Bewerten eines Lötprozesses in einer Lötanlage für flüssiges Lot (18), mit zumindest einer elektronischen Recheneinrichtung (22) und einer Wärmebildkamera (20), wobei die Überwachungsvorrichtung (12) zum Durchführen eines Verfahrens nach einem der Ansprüche 1 bis 12 ausgebildet ist.
